# EUROPEAN PATENT SPECIFICATION

(11) **EP 0 606 665 B1**
(45) Date of publication and mention of the grant of the patent: **20.08.1997**
(21) Application number: 93200071.4
(22) Date of filing: 12.01.1993
(51) Int. Cl.: H05B 41/29

(54) **Circuit arrangement**
Schaltung
Circuit

(43) Date of publication of application: 20.07.1994
(73) Proprietor: Philips Electronics N.V., 5621 BA Eindhoven (NL)
(72) Inventor: Wong, John, c/o Int. Octrooibureau B.V., 5656 AA Eindhoven (NL)
(74) Representative: Evers, Johannes Hubertus Maria

(56) References cited:
- EP-A- 0 395 776
- EP-A- 0 488 478
- WO-A-92/04808

## Description

The invention relates to a ballast circuit suitable for high frequency operation of a fluorescent lamp comprising
- AC input terminals for coupling to a mains source of a low frequency AC voltage,
- rectifying means coupled across said AC input terminals for rectifying said low frequency AC voltage,
- reservoir capacitive means coupled to an output of said rectifying means,
- a DC-AC-converter comprising
   - DC input terminals coupled to said reservoir capacitive means,
   - switching means for generating a high frequency current out of said rectified AC voltage,
   - a load circuit comprising lamp connection terminals and coupled to said switching means,
- a feedback circuit coupling the load circuit to an AC input terminal.

The invention also relates to a compact fluorescent lamp comprising such a ballast circuit.

A ballast circuit as defined in the first paragraph is described in European Patent Application 92203651.2. Depending on the configuration of the DC-AC-converter the feedback circuit may comprise components, but can also be a the load circuit and an AC input terminal having an impedance substantially equal to zero. It has been found that such a ballast circuit has a relatively high power factor, when used to operate a fluorescent lamp of low power. In case a fluorescent lamp consuming a relatively high power is operated with the ballast circuit, however, the power factor is often relatively low or even does not comply with government standards as to line current distortion.

The invention has for its object to provide a ballast circuit that is suitable for operating fluorescent lamps consuming a relatively high power, with a relatively high power factor.

This object is achieved in that the ballast circuit is further provided with booster means comprising capacitive means and inductive means, said capacitive means being coupled between said AC input terminals and said inductive means being coupled between said capacitive means and said rectifying means.

During lamp operation the reservoir capacitive means are charged via the feedback circuit and the booster means to such a potential that no peak shaped currents are drawn from the mains source when the amplitude of the low frequency AC voltage is near its maximum. The suppression of these peak shaped currents means a substantial improvement of the power factor.

To prevent the fluorescent lamp from carrying a DC-current during lamp operation, it is advantageous when the feedback circuit comprises a capacitor.

In a favourable embodiment of a ballast circuit according to the invention said rectifying means comprise a first series arrangement of two diodes connecting said DC input terminals and a further series arrangement of two diodes connecting said DC input terminals, said capacitive means and said inductive means comprised in said booster means being connected in series between a first junction point between the two diodes of the first series arrangement and a second junction point between the two diodes of the second series arrangement. In this embodiment the rectifier means comprise a diode bridge and the booster means are connecting the input terminals of this diode bridge. This favourable embodiment is a relatively simple circuit that was found to provide a comparatively high power factor.

In a further favourable embodiment of a ballast circuit according to the invention said rectifying means comprise a series arrangement of two diodes connecting said DC input terminals and said reservoir capacitive means comprise a series arrangement of two capacitors connecting said DC input terminals, said capacitive means and said inductive means comprised in said booster means being connected in series between a first junction point between the two diodes and a second junction point between the two capacitors.
The rectifying means and the reservoir capacitive means in this further favourable embodiment form a voltage doubler. This feature makes the further favourable embodiment very suitable for use when the amplitude of the low frequency AC voltage is relatively low with respect to the lamp voltage.

It was found that, if in the embodiments described in the last two paragraphs the feedback circuit is connected to one of the two junction points, a very efficient energy feedback was realized.

Pollution of the source of low frequency AC voltage by high frequency currents can be avoided by filter means being coupled between said AC input terminals and said rectifying means.

Other objects, features and advantages of the invention will be apparent from the following description and appended claims when considered in conjunction with the accompanying drawing in which:
Figure 1 shows a compact fluorescent lamp control circuit embodying the invention;
Figure 2 shows an alternative embodiment of the input circuitry for the control circuit of Figure 1;
Figure 3 shows a flow of current through the circuit of Figure 1 with one of a pair of switching elements conducting; and
Figure 4 shows a flow of current through the circuit of Figure 1 with the second of the pair of switching elements conducting.

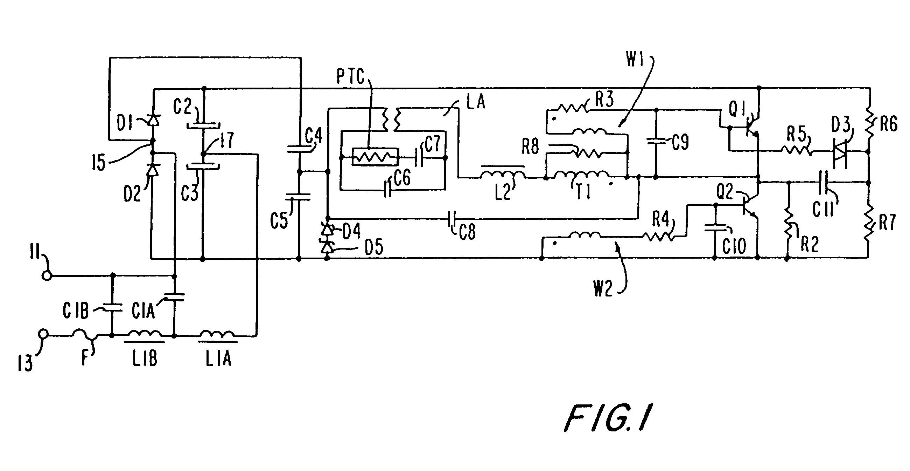

Referring to Figure 1, there is shown a compact fluorescent lamp LA coupled to an LC resonant circuit comprising inductor L2 and capacitor C6. Connected in parallel with lamp LA is a positive temperature coefficient resistor PTC which is in series circuit with a capacitor C7 which provides protection for resistor PTC. Resistor PTC enables the electrode windings of lamp LA to heat before full voltage is applied thereto. Also, connected in panel with the primary winding of transformer T1 is resistor R8. This resistor bypasses current around the primary which leads to a lower self-oscillation frequency for the circuit and results in higher current through inductor L2 and lamp LA.

Connected to the resonant circuit comprising inductor L2 and capacitor C6 is the primary of transformer T1. One secondary, W1, of transformer T1 is connected by way of resistor R3 to the base of transistor Q1. The other secondary, W2, of transformer T1 is connected through resistor R4 to the base of transistor Q2. Transistors Q1 and Q2 provide a high frequency DC to AC converter for operating lamp LA. Capacitors C9 and C10 are connected between the base and emitter of transistors Q1 and Q2, respectively. The resistors R2, RS, R6, R7 and capacitor C11 and diac D3 form the starting circuits for pulsing transistors Q1 and Q2 into operation at the desired high frequency. Resistors R6 and R7 provide a voltage divider circuit which is unbalanced by capacitor C11 and resistor R2. When capacitor C11 charges sufficiently, diac D3 is caused to turn on which pulses transistor Q1 into operation.

With transistor Q1 conducting, the primary of transformer T1 in time will begin to operate in the associated non-linear region of its hysteresis curve. When it does, the circuitry becomes ready for conduction through the next half cycle of the high frequency voltage produced by the disclosed control circuit. With transistor Q1 conducting when the non-linear operation begins, conduction through secondary W1 to its base is cut off. As a result, the next half cycle of the high frequency voltage will produce conduction through the secondary, W2, of transistor T1 connected through resistor R4 to the base of transistor Q2 to turn it on during that half cycle.

Zener diodes D4 and D5 are connected in parallel with capacitor C5 to serve as a limit to the maximum voltage which can build up on electrolytic capacitors C2 and C3. These electrolytic capacitors are connected in parallel with the half bridge diodes D1 and D2. Capacitors C2 and C3 provide a so-called "voltage doubling" operation for the circuit.

Energy returning from the resonant circuit by way of capacitor C4 and C5 and diodes D1 and D2 is operative to develop a voltago across inductor L1A. This voltage is provided to electrolytic capacitors C2 and C3 and adds to the AC line in a voltage. By proper choice of capacitors C4 and C5 the half bridge inverter circuit will act like a high frequency boost converter to raise the voltage on each of the electrolytic buffer capacitors to a value above the peak line voltage. This improves the circuit power factor and reduces in line current harmonics. The improved power factor means the circuit draws much lower input current. Capacitor C8 acts as a snubbing capacitance for shaping the high frequency AC pulse.

First capacitor C1A is coupled from the input terminals 11 and 13 to the junction 15 between diodes D1 and D2. First inductor L1A is coupled from input 13 to the junction 17 between electrolytic capacitors C2 and C3. In this way, first capacitor C1A and first inductor L1A provide current paths for the charging of electrolytic capacitors C2 and C3. In this way, the so-called "voltage doubling" effect is provided by capacitors C2 and C3 for proper operation of lamp LA. Capacitor C1B and inductor L1B provide an LC filter for keeping high frequency signals off the input lines to the ballast circuit. Capacitor C1B is coupled in parallel with capacitor C1A and inductor L1B is coupled in series with inductor L1A. Fuse F is connected to terminal 13 to provide protection against high current fault conditions.

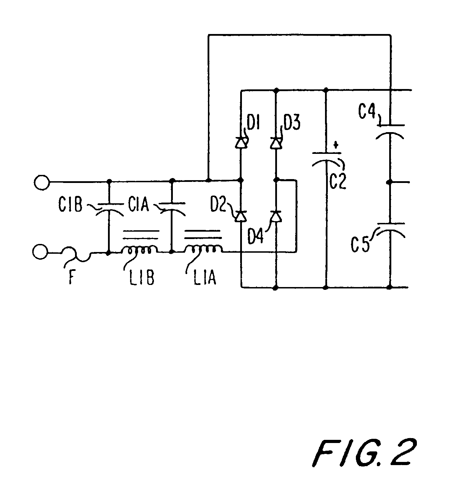

In Figure 2, the half bridge has been replaced by the full bridge D1-D4. Since this circuit was used with a lamp requiring less voltage than the lamp used with the circuit of Figure 1, the voltage doubling effect was not required and capacitor C3 was eliminated. Capacitor C1A and inductor L1A were connected to the diagonals of the full bridge.

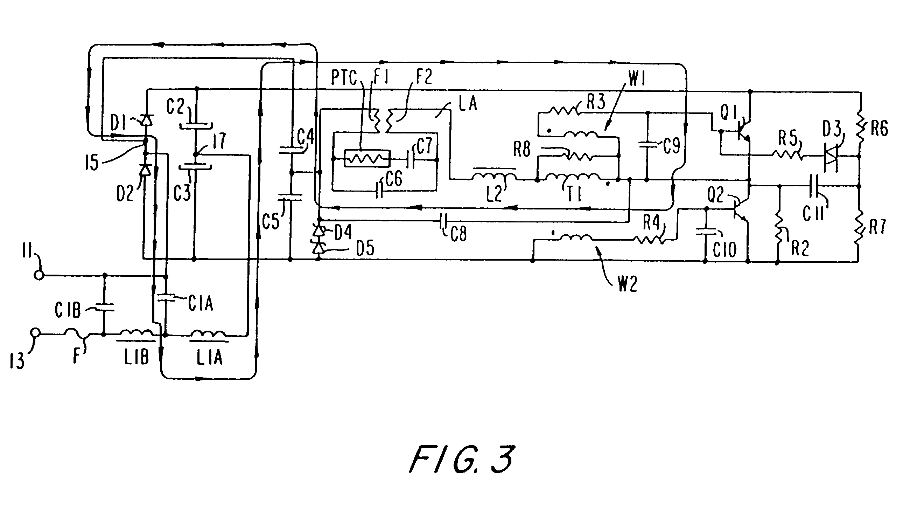

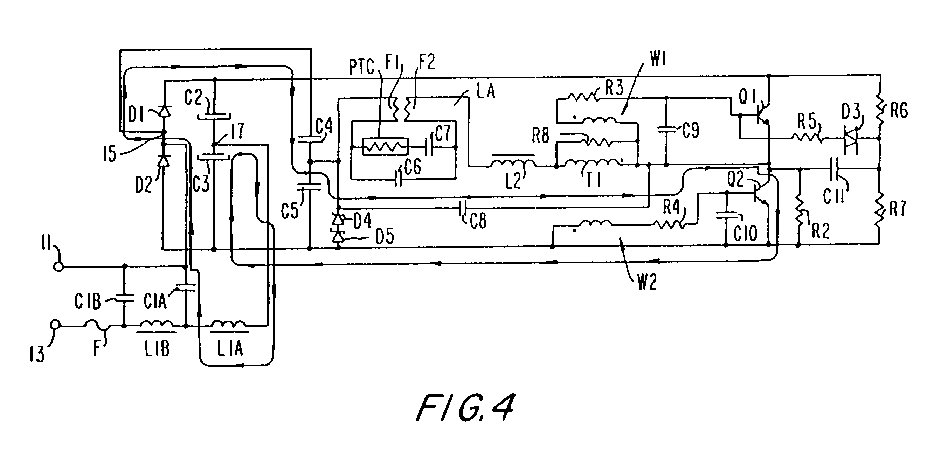

A description of the theory of operation of the circuit of Figure 1 will be understood by those skilled in the art by reference to Figures 3 and 4. For purposes of this explanation, it is assumed that a single pulse from diac D3 has turned transistor Q1 on. It is also assumed that a sufficient DC supply voltage has been developed across capacitors C2 and C3 to sustain self-oscillation. For purposes of this explanation, the line voltage across terminals 11 and 13 is assumed to be near the zero voltage crossing. With transistor Q1 conducting capacitor C2 acts as a voltage source (see Figure 3) which supplies current from the collector to the emitter of transistor Q1 through the primary of transformer T1, inductor L2 and the lamp load network consisting of capacitors C6, C7, lamp LA and resistor PTC. As shown in Figure 3, this current also flows through capacitor C4, junction 15, capacitor C1A and inductor L1A. Current through the primary of transistor T1 when transistor Q1 is conducting, causes current to flow through secondary winding W1 of transformer T1 to reinforce the base emitter current supply of transistor Q1 thus holding Q1 in its conductive state by positive feedback. As a result, current builds up through the aforementioned components. The rate of rise of this current is mainly controlled by the inductance of inductor L2. The current continues to rise until the hysteresis of the core of transformer T1 reaches a first non-linear region.

As the transformer action of transformer T1 becomes non-linear the base drive from secondary W1 drops off sharply turning off transistor Q1 and current through the primary of transformer T1 ceases. When this occurs, linear transformer action returns to transformer T1 by the abrupt loss of its primary current. As a result, secondary winding W2 induces current into the base emitter junction of transistor Q2 thus turning that transistor on. With transistor Q2 conducting, capacitor C3 acts as a voltage source (see Figure 4) which supplies current through inductor L1A, capacitor C1A, junction 15, capacitor C4, the lamp load network (consisting of capacitors C6 and C7, lamp LA and resistor PTC,) inductor L2, the primary of transformer T1 and through the collector-emitter junctions of transistor Q2. This current through the primary of transistor T1 causes current to flow through the secondary winding W2 of transformer T1 to reinforce the base emitter current supply of transistor Q2 by positive feedback. As was the case when transistor Q1 was conducting, current builds up in the primary of transformer T1 until it begins to operate in the second non-linear region of its the hysteresis curve. When this occurs, the base drive for transistor Q2 drops off and the transistor becomes non-conducting. This action of transistor Q2 ceases the flow of current through the primary of transformer T1 which causes secondary winding W1 to again provide currents to the base of transistor Q1. This turns that transistor back to its conducting condition to self perpetuate the oscillation cycle. As a result, transistors Q1 and Q2 thus turn on and off alternately to produce alternating current through the lamp load network.

Having successfully started self oscillation in the circuit, the frequency of operation is determined by the non-linearity of the hysteresis curve of transformer T1 together with the shape and magnitude of the primary current of transformer T1 produced by the lamp load network and inductor L2, the base currents for transistors Q1 and Q2, the RC delay networks (R3, C9 and R4, C10) at the bases of transistors Q1 and Q2 and the switching times of transistors Q1 and Q2.

In the self oscillating state, alternating current flows from capacitors C2 and C3 as a result of the alternate on/off conditions of transistors Q1 and Q2. This alternating current flows through lamp filaments F1 and F2, capacitor C6, inductor L2 and the primary of transformer of T1. Resistor PTC which is in series with capacitor C7 provides extra resistive loading on the series resonant LC circuit consisting of inductor L2 and capacitor C6 which, as mentioned, allows for preheating of the filaments F1 and F2. As resistor PTC heats up, its resistance increases. This causes voltage to increase across capacitor C6 until lamp LA which is in parallel with capacitor C6 ignites. After lamp ignition, the lamp loads down the resonant LC circuit and current through the lamp is basically controlled by inductor L2, the lamp arc voltage, the input supply voltage on capacitors C2 and C3 and the self oscillation frequency of the circuit.

It should be apparent that various modifications of the above will be evident to those skilled in the art and that the arrangement described herein is for illustrative purposes and is not to be considered restrictive.

## Claims

1. Ballast circuit suitable for high frequency operation of a fluorescent lamp (LA) comprising
- AC input terminals (11,13) for coupling to a mains source of a low frequency AC voltage,
- rectifying means (D1,D2) coupled across said AC input terminals for rectifying said low frequency AC voltage,
- reservoir capacitive means (C2,C3) coupled to an output of said rectifying means,
- a DC-AC-converter comprising
- DC input terminals coupled to said reservoir capacitive means,
- switching means (Q1,Q2) for generating a high frequency current out of said rectified low frequency AC voltage,
- a load circuit (LA,L2,C6,C7) comprising lamp connection terminals and coupled to said switching means,
- a feedback circuit (C4) coupling the load circuit to an AC input terminal,
characterized in that the ballast circuit is further provided with booster means comprising capacitive means and inductive means, said capacitive means (C1A) being coupled between said AC input terminals and said inductive means (L1A) being coupled between said capacitive means (C1A) and said rectifying means (D1,D2).

2. Ballast circuit as claimed in claim 1, wherein said feed back circuit comprises a capacitor (C4).

3. Ballast circuit as claimed in claim 1 or 2, wherein said rectifying means comprise a first series arrangement of two diodes (D1,D2) connecting said DC input terminals and a further series arrangement of two diodes (D3,D4) connecting said DC input terminals, said capacitive means (C1A) and said inductive means (L1A) comprised in said booster means being connected in series between a first junction point between the two diodes of the first series arrangement and a second junction point between the two diodes of the second series arrangement.

4. Ballast circuit as claimed in claim 1 or 2, wherein said rectifying means comprise a series arrangement of two diodes (D1,D2) connecting said DC input terminals and said reservoir capacitive means (C2,C3) comprise a series arrangement of two capacitors connecting said DC input terminals, said capacitive means (C1A) and said inductive means (L1A) comprised in said booster means being connected in series between a first junction point between the two diodes and a second junction point between the two capacitors.

5. Ballast circuit as claimed in claim 3 or 4, wherein said feedback circuit is connected to the first junction point (15).

6. Ballast circuit as claimed in claim 3 or 4, wherein said feedback circuit is connected to the second junction point (17).

7. Ballast circuit as claimed in one or more of the preceding claims, wherein filter means (C1B,L1B) are coupled between said AC input terminals and said rectifying means.

8. Compact fluorescent lamp comprising a ballast circuit according to one or more of the preceding claims.

## Patentansprüche

1. Geeignetes Vorschaltgerät für Hochfrequenzbetrieb einer Leuchtstofflampe (LA) mit
- Wechselspannungs-Eingangsklemmen (11, 13) zum Verkoppeln mit einer Netzspannungsquelle einer Niederfrequenz-Wechselspannung,
- Gleichrichtermitteln (D1, D2), gekoppelt über die Wechselspannungs-Eingangsklemmen zum Gleichrichten der Nf-Wechselspannung,
- Speicherkondensatormitteln (C2, C3), gekoppelt mit einem Ausgang der Gleichrichtermittel,
- einem Wechselrichter mit
- Gleichspannungs-Eingangsklemmen, gekoppelt mit den Speicherkondensatormittel,
- Schaltmitteln (Q1, Q2) zum Erzeugen eines Hf-Stroms aus der gleichgerichteten Wechselspannung,
- einem Verbraucherkreis (LA, L2, C6, C7) mit Lampenverbindungsklemmen und in Verbindung mit den Schaltmitteln,
- einer Rückkoppelschaltung (C4) zum Koppeln des Verbraucherkreises mit einer Wechselspannungs-Eingangsklemme, dadurch
gekennzeichnet, daß das Vorschaltgerät außerdem mit Boostermitteln versehen ist, die kapazitive und induktive Mittel enthalten, wobei die kapazitiven Mittel (C1A) zwischen den Wechselspannungs-Eingangsklemmen und die induktiven Mittel (L1A) zwischen den kapazitiven Mitteln (C1A) und den Gleichrichtermitteln (D1, D2) gekoppelt sind.

2. Vorschaltgerät nach Anspruch 1, worin die Rückkoppelschaltung einen Kondensator (C4) enthält.

3. Vorschaltgerät nach Anspruch 1 oder 2, worin die Gleichrichtermittel eine erste Reihenschaltung von zwei Dioden (D1, D2) zum Verbinden der Gleichspannungs-Eingangsklemmen sowie eine weitere Reihenschaltung von zwei Dioden (D3, D4) zum Verbinden der Gleichspannungs-Eingangsklemmen enthalten, wobei die kapazitiven Mittel (C1A) und die induktiven Mittel (L1A) in den Boostermitteln zwischen einem ersten Knotenpunkt zwischen den zwei Dioden der ersten Reihenschaltung und einem zweiten Knotenpunkt zwischen den zwei Dioden der zweiten Reihenschaltung angeschlossen sind.

4. Vorschaltgerät nach Anspruch 1 oder 2, worin die Gleichrichtermittel eine Reihenschaltung von zwei Dioden (D1, D2) zum Verbinden der Gleichspannungs-Eingangsklemmen, und die Speicherkondensatormittel (C1, C2) eine Reihenschaltung von zwei Kondensatoren zum Verbinden der Gleichspannungs-Eingangsklemmen enthalten, wobei die kapazitiven Mittel (C1A) und die induktiven Mittel (L1A) in den Boostermitteln zwischen einem ersten Knotenpunkt und einem zweiten Knotenpunkt zwischen den zwei Kondensatoren in Reihe geschaltet sind.

5. Vorschaltgerät nach Anspruch 3 oder 4, worin die Rückkoppelschaltung mit dem ersten Knotenpunkt (15) verbunden ist.

6. Vorschaltgerät nach Anspruch 3 oder 4, worin die Rückkoppelschaltung mit dem zweiten Knotenpunkt (17) verbunden ist.

7. Vorschaltgerät nach einem oder mehreren der vorangehenden Ansprüche, worin die Filtermittel (C1B, L1B) zwischen den Wechselspannungs-Eingangsklemmen ind den Gleichrichtermitteln gekoppelt werden.

8. Raumsparende Leuchtstofflampe mit einem Voprschaltgerät nach einem oder mehreren der vorangehenden Ansprüche.

## Revendications

1. Circuit ballast convenant pour le fonctionnement à fréquence élevée d'une lampe fluorescente (LA), comprenant
- des bornes d'entrée de courant alternatif (11, 13) pour le couplage à une source secteur d'une tension alternative à basse fréquence,
- des moyens redresseurs (D1, D2), couplés auxdites bornes d'entrée de courant alternatif pour redresser ladite tension alternative à basse fréquence,
- des moyens capacitifs de stockage (C2, C3) couplés à une sortie desdits moyens redresseurs,
- un convertisseur continu-alternatif comprenant
- des bornes d'entrée de courant continu couplées auxdits moyens capacitifs de stockage,
- des moyens de commutation (Q1, Q2), pour générer un courant à fréquence élevée à partir de ladite tension alternative à basse fréquence redressée,
- un circuit de charge (LA, L2, C6, C7), comprenant des bornes de connexion de lampe et couplé auxdits moyens de commutation,
- un circuit de réaction (C4) couplant le circuit de charge à une borne d'entrée de courant alternatif,
caractérisé en ce que le circuit ballast comporte en outre des moyens survolteurs comprenant un moyen capacitif et un moyen inductif, ledit moyen capacitif (C1A) étant couplé entre lesdites bornes d'entrée de courant alternatif et ledit moyen inductif (L1A) étant couplé entre ledit moyen capacitif (C1A) et lesdits moyens redresseurs (D1, D2).

2. Circuit ballast suivant la revendication 1, dans lequel ledit circuit de réaction comprend un condensateur (C4).

3. Circuit ballast suivant la revendication 1 ou 2, dans lequel lesdits moyens redresseurs comprennent ledit montage en séries de deux diodes (D1, D2) reliant lesdites bornes d'entrée de courant continu et un autre montage en séries de deux diodes (D3, D4), reliant lesdites bornes d'entrée de courant continu, ledit moyen capacitif (C1A) et ledit moyen inductif (L1A) compris dans lesdits moyens survolteurs étant montés en séries entre un premier point de jonction entre les deux diodes du premier montage en séries et un second point de jonction entre les deux diodes du deuxième montage en séries.

4. Circuit ballast suivant la revendication 1 ou 2, dans lequel lesdits moyens redresseurs comprennent un montage en séries de deux diodes (D1, D2) reliant lesdites bornes d'entrée de courant continu et lesdits moyens capacitifs de stockage (C2, C3) comprennent un montage en séries de deux condensateurs reliant lesdites bornes d'entrée de courant continu, ledit moyen capacitif (C1A) et ledit moyen inductif (L1A) compris dans lesdits moyens survolteurs étant montés en séries entre un premier point de jonction entre les deux diodes et un second point de jonction entre les deux condensateurs.

5. Circuit ballast suivant la revendication 3 ou 4, dans lequel ledit circuit de réaction est connecté au premier point de jonction (15).

6. Circuit ballast suivant la revendication 3 ou 4, dans lequel ledit circuit de réaction est connecté au second point de jonction (17).

7. Circuit ballast suivant l'une quelconque des revendications précédentes, dans lequel les moyens de filtrage (C1B, L1B) sont couplés entre lesdites bornes d'entrée de courant alternatif et lesdits moyens redresseurs.

8. Lampe fluorescente compacte comprenant un circuit ballast suivant une ou plusieurs des revendications précédentes.
